## Europäisches Patentamt
## European Patent Office
## Office européen des brevets

(19)

(11) Veröffentlichungsnummer : **0 196 594**
**B1**

(12) **EUROPÄISCHE PATENTSCHRIFT**

(45) Veröffentlichungstag der Patentschrift :
13.12.89

(51) Int. Cl.⁴ : **C 03 C 8/00**, C 23 D 5/04

(21) Anmeldenummer : **86104040.0**

(22) Anmeldetag : **24.03.86**

(54) Emailpulver für den elektrostatischen Auftrag.

(30) Priorität : **04.04.85 DE 3512336**

(43) Veröffentlichungstag der Anmeldung :
**08.10.86 Patentblatt 86/41**

(45) Bekanntmachung des Hinweises auf die Patenterteilung : **13.12.89 Patentblatt 89/50**

(84) Benannte Vertragsstaaten :
**BE DE FR GB IT NL**

(56) Entgegenhaltungen :
**EP—A— 0 001 234**
**FR—A— 2 083 650**
**US—A— 4 110 487**
**CERAMIC ENGINEERING AND SCIENCE PROCEE-**
**DINGS, Nr. 5/6, Mai-Juni 1986, Seiten 654-662, Colum-**
**bus, Ohio, US; L.J. GAZO: "Pickle-free catalytic por-**
**celain enamel powder system"**

(73) Patentinhaber : **BAYER AG**
**D-5090 Leverkusen 1 Bayerwerk (DE)**

(72) Erfinder : **Schittenhelm, Hans-Joachim, Dr.**
**Walter-Flex-Strasse 6**
**D-5090 Leverkusen 1 (DE)**
Erfinder : **Joseph, Werner, Dr.**
**Ludwig-Aschoff-Strasse 20**
**D-5000 Köln 80 (DE)**

EP 0 196 594 B1

## Beschreibung

Die vorliegende Erfindung betrifft Emailpulver für den elektrostatischen Pulverauftrag mit überlegenen Beschichtungseigenschaften für geometrisch schwierige Werkstücke in Bereichen geringer Feldliniendichte.

Voraussetzung für den elektrostatischen Pulverauftrag von Emailfritten mit guter Pulverhaftung ist die Einstellung eines hohen elektrischen Oberflächenwiderstandes sowie gute Pulverfluidität während des Aufbringens der Emailpartikel auf das metallische Werkstück. Zur Einstellung des erforderlichen Oberflächenwiderstands können Emailfritten gemäß DE-PS 2 015 072 mit speziellen mit Si-OH-Gruppen der Fritteteilchen in Reaktion tretenden isolierenden Substanzen, vorzugsweise während der Vermahlung behandelt werden.

Die für den kontinuierlichen Pulverauftrag in industriellen Anlagen notwendige Fluidität des Pulvers ist weitgehend von der Zusammensetzung der verwendeten Fritten, ihrer Teilchengröße sowie Art und Konzentration des Beladungsmittels abhängig. Zur Bestimmung der Pulverfluidität wurde vorgeschlagen, eine bestimmte Pulvermenge in einem definerten Luftstrom aufzuwirbeln und nach Einstellung einer konstanten Wirbelschichthöhe, die durch eine seitliche Öffnung ausfließende Pulvermasse nach einer bestimmten Zeit auszuwiegen. Das Gewicht des ausfließenden Pulvers ist ein Maß für die Fluidität des Pulvers (Lambert, Email Metal, 24, 1975, 19 ff.).

Bei der Beschichtung geometrisch schwieriger Teile, z.B. in Hohlräumen oder bei der Innenbeschichtung von Backkästen, kommt es insbesondere in den Ecken in Bereichen geringer Feldliniendichte zu einer ungenügenden Pulverabscheidung.

Das gleiche trifft zu, wenn an Flachteilen Sicken eingeprägt oder Flansche aufgeschweißt sind. Der ungleichmäßige Pulverauftrag macht sich in diesen kritischen Bereichen geringer Feldliniendichte nach dem Einbrennen des Pulvers in Farbveränderungen bemerkbar. In ungünstigen Fällen kommt es durch zu geringe Emailschichtstärke zu den bekannten Verzehrungen durch unvollständige Oxidauflösung im Glas.

Eine Erhöhung der Beladungsmittelkonzentration verbessert zwar in der Regel die Pulverpenetration und vermindert die beschriebenen Fehler, verringert jedoch gleichzeitig die Fluidität des Pulvers.

Überraschenderweise wurde nun gefunden, daß die Pulverpenetration ohne Einbuße der Pulverfluidität durch Erhöhung des Oberflächenwiderstandes des Emailpulvers verbessert werden kann.

Gegenstand der vorliegenden Erfindung sind daher Emailpulver für den elektrostatischen Auftrag, insbesondere in Bereich geringer Feldliniendichte, mit einem Oberflächenwiderstand von mehr als $10^{16}\,\Omega$, wobei das Gewichtsverhältnis der Alkalioxide $Na_2O : K_2O$ und der Erdalkalioxide $CaO : BaO$ jeweils etwa 1 : 1 beträgt, das Emailpulver einen Gehalt an Polymethyl-Wasserstoffsiloxanen von etwa 0,2 bis 1 Gew.-% aufweist und der Fluor- und $P_2O_5$-Gehalt unter 2 Gew.-% liegen.

Die zur Erzielung der erfindungsgemäßen « hochohmigen » Emailpulver verwendeten erfindungsgemäßen Emailfritten zeichnen sich also durch ein abgestimmtes Verhältnis im Schmelzversatz der verwendeten Alkali- und Erdalkalioxide sowie durch einen geringen Fluor- und $P_2O_5$-Gehalt aus.

Bei den erfindungsgemäßen Pulveremails (Grund- und Direktemailfritten) beträgt das Gewichtsverhältnis von Natrium- und Kaliumoxid etwa 1 : 1, das Gewichtsverhältnis Calcium- und Bariumoxid ebenfalls angenähert 1 : 1. Der Fluor- und $P_2O_5$-Gehalt liegt unter 2 %, vorzugsweise unter 1 %.

Die erfindungsgemäßen Pulveremails zeichnen sich durch besonders gute Reaktionsfähigkeit mit Methyl-Wasserstoff-Siloxanen aus. Sie ergeben überraschenderweise beim gemeinsamen Vermahlen mit Methyl-Wasserstoff-Siloxanen einen Pulverwiderstand von mehr als $10^{16}\,\Omega$.

Ihr Oberflächenwiderstand ist damit gegenüber handelsüblichen unter gleichen Bedingungen mit dem gleichen Beladungsmittel hergestellten Grund- und Direktemails um $10^2\text{-}10^4\,\Omega$ höher, obwohl der Widerstand der gemahlenen Fritten ohne Zusätze vermahlen mit $10^8\text{-}10^{10}\,\Omega$ nicht höher ist als bei handelsüblichen Fritten.

Die erfindungsgemäßen Fritten zeichnen sich durch wesentlich verbesserte Pulverpenetration aus, was sich in einer gleichmäßigen Schichtstärke in allen Bereichen des Werkstücks bemerkbar macht. Die beschriebenen, durch unterschiedliche Pulverbeschichtung verursachten Fehler sind damit behoben.

Eine typische Emailfritte hat z.B. folgende Zusammensetzung :

|  | Gew.-% |
|---|---|
| $SiO_2$ | 36-40 |
| $Al_2O_3$ | 0-4 |
| $B_2O_3$ | 12-16 |
| $Na_2O$ | 7-9 |
| $K_2O$ | 7-9 |
| $ZrO_2$ | 5-10 |
| $CaO$ | 4-6 |
| $BaO$ | 4-6 |
| $P_2O_5$ | 0-1 |
| $CoO$ | 1 |

| | |
|---|---|
| NiO | 2 |
| MnO | 0-2 |
| CnO | 0-2 |
| F | 0-1 |

Ein Maß für die Pulverpenetration ist die Abscheidungsrate eines Pulveremails auf einem Stahlsubstrat ohne anlegen einer elektrischen Spannung. Hierzu wird das Emailpulver unter definierten Bedingungen mit Hilfe handelsüblicher Pulverpistolen mit einer konstanten Förderluftmenge auf Probeplatten aufgesprüht. Die abgeschiedene Pulvermasse wird als Funktion von der Zeit bestimmt. Die im stromlosen Zustand aufgebrachte Emailmasse ist ein Maß für die Pulverpenetration. Diese ist um so besser je mehr Email auf der Probeplatte abgeschieden wird und korreliert mit Versuchen in der Praxis bei Anlegen von Hochspannung an die Pulverpistole.

Der Gegenstand der vorliegenden Erfindung soll nun anhand des folgenden Beispiels weiter erläutert werden.

Beispiel

In einem Schamottetiegel wurde in einem elektrisch beheizten Schmelzofen bei 1200 °C eine Emailfritte aus entsprechenden Rohstoffen mit folgender oxidischer Zusammensetzung erschmolzen :

| | Gew.-% |
|---|---|
| $SiO_2$ | 40 |
| $Al_2O_3$ | 3 |
| $B_2O_3$ | 15 |
| $Na_2O$ | 9 |
| $K_2O$ | 9 |
| $ZrO_2$ | 8 |
| CaO | 6 |
| BaO | 6 |
| CoO | 1 |
| NiO | 2 |
| MnO | 1 |

Nach einer Verweilzeit von 20 min. wurde der klare Schmelzfluß zwischen wassergekühlten Stahlwalzen abgeschreckt. Die auf diese Weise erhaltenen Flakes wurden in eine Porzellankugelmühle unter Zusetzung von 0,35 Gew.-% Methyl-Wasserstoff-Siloxan so lange vermahlen, daß 80 % des dabei entstehenden Pulvers eine Teilchengröße von < 40 μm aufweisen. Die erhaltene Fritte wies einen Widerstand von $5.10^{16} \, \Omega$ auf.

Zur Bestimmung der Abscheidefähigkeit unterschiedlicher Emailpulver wurde die in den Mitteilungen des Vdefa 1984, S. 137 ff, beschriebene Methode herangezogen.

Hierbei wurde in den Becher einer für den elektrostatischen Emailauftrag geeigneten Pistole jeweils ein handelsübliches Pulveremail mit einem Oberflächenwiderstand von $10^{12}$ (Pulver A) und das erfindungsgemäße hochohmige Emailpulver mit einem Oberflächenwiderstand von $5 \times 10^{16}$ (Pulver B) eingefüllt.

Mit diesen Pulvern wurde im spannungslosen Zustand unter gleichen Anlagenparametern ein konstanter Pulverstrom eingestellt und auf ein 20 × 20 cm großes Stahlblech aufgesprüht.

Während des Aufsprühens wurde die Massezunahmen der Platte über eine Wägevorrichtung in Abhängigkeit von der Sprühzeit bestimmt und registriert.

Das Ergebnis dieser Vergleichsversuche zeigt die folgende Tabelle :

| Emailpulver | abgeschiedene Menge (in g) nach sec. | | | |
|---|---|---|---|---|
| | 10 | 20 | 30 | 40 |
| A | 1,5 | 2,5 | 3 | 3,5 |
| B | 6 | 12 | 17 | 23 |

Hieraus geht hervor, daß die in der Zeiteinheit abgeschiedenen Mengen des erfindungsgemäßen Pulvers B deutlich über der des handelsüblichen Pulveremails A liegen.

Die im stromlosen Zustand abgeschiedene Pulvermenge ist ein Maß für die Pulverpenetration, d.h. Pulverabscheidung in Bereichen geringer Feldliniendichte.

Das erfindungsgemäß hergestellte hochohmige Pulver ergibt besonders bei geometrisch ungünstigen Werkstücken, z.B. in Hohlräumen, gleiche Schichtstärken wie auf den geometrisch begünstigten ebenen Flächen.

**Patentanspruch**

Emailpulver für den elektrostatischen Auftrag, insbesondere in Bereichen geringer Feldliniendichte, mit einem Oberflächenwiderstand von mehr als $10^{16}$, wobei das Gewichtsverhältnis der Alkalioxide $Na_2O : K_2O$ und der Erdalkalioxide $CaO : BaO$ jeweils etwa $1:1$ beträgt, das Emailpulver einen Gehalt an Polymethyl-Wasserstoffsiloxanen von etwa 0,2 bis 1 Gew.-% aufweist und der Fluor- und $P_2O_5$-Gehalt unter 2 Gew.-% liegen.

**Claim**

Enamel powder for electrostatic coating, especially in zones of low field line density with a surface resistance of more than $10^{16}$, wherein the weight ratio of the alkali oxides $Na_2O : K_2O$ and the alkali earth oxides $CaO : BaO$ is about $1:1$, the enamel powder containing polymethyl-hydrogen siloxanes of between 0.2 to 1 weight % and fluor- and $P_2O_5$ content under 2 weight %.

**Revendication**

Poudre d'émail pour le dépôt électrostatique, en particulier dans les domaines de faible densité des lignes de champ, ayant une résistance superficielle de plus de $10^{16}$ Ω, le rapport pondéral des oxydes alcalins $Na_2O : K_2O$ et le rapport pondéral des oxydes alcalino-terreux $CaO : BaO$ étant chaque fois d'environ $1:1$, la poudre d'émail ayant une teneur en polyméthylhydrogénosiloxannes d'environ 0,2 à 1 % en poids et la teneur en fluor et $P_2O_5$ étant de moins de 2 % en poids.